(19)

Europäisches
Patentamt
European
Patent Office
Office européen
des brevets

(11) **EP 4 503 166 A1**

(12) **EUROPEAN PATENT APPLICATION**
published in accordance with Art. 153(4) EPC

(43) Date of publication:
**05.02.2025  Bulletin 2025/06**

(21) Application number: **23774708.4**

(22) Date of filing: **15.03.2023**

(51) International Patent Classification (IPC):
*H01M 4/13* (2010.01)        *H01G 11/26* (2013.01)
*H01G 11/28* (2013.01)       *H01G 11/30* (2013.01)
*H01G 11/36* (2013.01)       *H01G 11/50* (2013.01)
*H01G 11/68* (2013.01)       *H01G 11/70* (2013.01)
*H01M 4/32* (2006.01)        *H01M 4/62* (2006.01)
*H01M 4/66* (2006.01)

(52) Cooperative Patent Classification (CPC):
**H01G 11/26; H01G 11/28; H01G 11/30;**
**H01G 11/36; H01G 11/50; H01G 11/68;**
**H01G 11/70; H01M 4/13; H01M 4/32; H01M 4/62;**
**H01M 4/66;** Y02E 60/10

(86) International application number:
**PCT/JP2023/010188**

(87) International publication number:
**WO 2023/182112 (28.09.2023 Gazette 2023/39)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **24.03.2022  JP 2022048099**

(71) Applicant: **KABUSHIKI KAISHA TOYOTA**
**JIDOSHOKKI**
**Kariya-shi, Aichi 448-8671 (JP)**

(72) Inventors:
• **KONDO Yushi**
  **Kariya-shi, Aichi 448-8671 (JP)**
• **MASUDA Masaki**
  **Kariya-shi, Aichi 448-8671 (JP)**
• **ISOMURA Naohiko**
  **Kariya-shi, Aichi 448-8671 (JP)**

(74) Representative: **TBK**
**Bavariaring 4-6**
**80336 München (DE)**

(54) **ELECTRODE FOR POWER STORAGE DEVICE**

(57)    An electrode (100) for a power storage device includes a current collector (101) having a first surface (101a), and an active material layer (102) that is formed on the first surface (101a) of the current collector (101). A thickness of the active material layer (102) is 250 μm or more. A carbon coat layer (C) is provided on the first surface (101a) of the current collector (101). The active material layer (102) contains an active material that can store and release charge carriers, an aqueous binder, and single-walled carbon nanotubes. A content of the single-walled carbon nanotubes in the active material layer (102) is in a range of 0.035% by mass to 0.08% by mass.

Fig.1

**EP 4 503 166 A1**

**Description**

TECHNICAL FIELD

The present invention relates to an electrode for a power storage device.

BACKGROUND ART

A power storage device disclosed in Patent Literature 1 includes a positive electrode and a negative electrode, each of which has an active material layer formed on one surface of a current collector, and a separator arranged between the positive electrode and the negative electrode. The positive electrode and the negative electrode are arranged so that the active material layers face each other while sandwiching the separator therebetween. The active material layers of the positive electrode and the negative electrode contain conductive fibers, as a conductive aid for enhancing electron conductivity in the active material layer.

CITATION LIST

Patent Literature

Patent Literature 1: Japanese Laid-Open Patent Publication No. 2016-189325

SUMMARY OF INVENTION

Technical Problem

As one of methods for enhancing an energy density of the above power storage device, the proportion of the active material layer in the power storage device may be increased by increasing the thickness of the active material layer of the electrode. The present inventors have newly discovered that, in an electrode in which an active material layer is relatively thick, a long-term output of the power storage device can decrease when the active material layer contains carbon nanotubes. In addition, the present inventors have also discovered that the peel strength of the active material layer to the current collector provided with a carbon coat layer is enhanced by causing the active material layer of the electrode to contain carbon nanotubes.

Solution to Problem

To achieve the foregoing objectives, an electrode for a power storage device includes a current collector having a first surface, and an active material layer that is formed on the first surface of the current collector and has a thickness of 250 $\mu$m or more. A carbon coat layer is provided on the first surface of the current collector. The active material layer contains an active material that can store and release charge carriers, an aqueous binder, and single-walled carbon nanotubes. A content of the single-walled carbon nanotubes in the active material layer is in a range of 0.035% by mass to 0.08% by mass.

In the above-described electrode for the power storage device, a density of the active material layer is preferably 1.8 g/cm$^3$ or more.

In the above-described electrode for the power storage device, the aqueous binder preferably contains styrene-butadiene rubber, and a content of the styrene-butadiene rubber is preferably in a range of 1.2% by mass to 1.8% by mass.

In the above-described electrode for the power storage device, the current collector is preferably an aluminum current collector that is composed of aluminum, and the current collector is preferably used as a positive electrode.

In the above-described electrode for the power storage device, a content of the active material in the active material layer is preferably 96% by mass or more.

In the above-described electrode for the power storage device, a thickness of the carbon coat layer is preferably in a range of 0.1 $\mu$m to 5.0 $\mu$m.

Advantageous Effects of Invention

According to the present invention, the long-term output power of the power storage device and the peel strength of the active material layer to the current collector are enhanced.

BRIEF DESCRIPTION OF DRAWINGS

Fig. 1 is a cross-sectional view of an electrode for a power storage device.
Fig. 2 is an electron micrograph of a first surface of a current collector from which an active material layer has been peeled off.
Fig. 3 is a cross-sectional view of the power storage device.
Fig. 4 is a cross-sectional view of a bipolar electrode, which is an electrode according to a modification.
Fig. 5 is a graph showing a relationship between a carbon nanotube content and a long-term output power.
Fig. 6 is a graph showing a relationship between a carbon nanotube content and a short-term output power.

DESCRIPTION OF EMBODIMENTS

One embodiment of the present invention will be described below with reference to the drawings.

Electrode

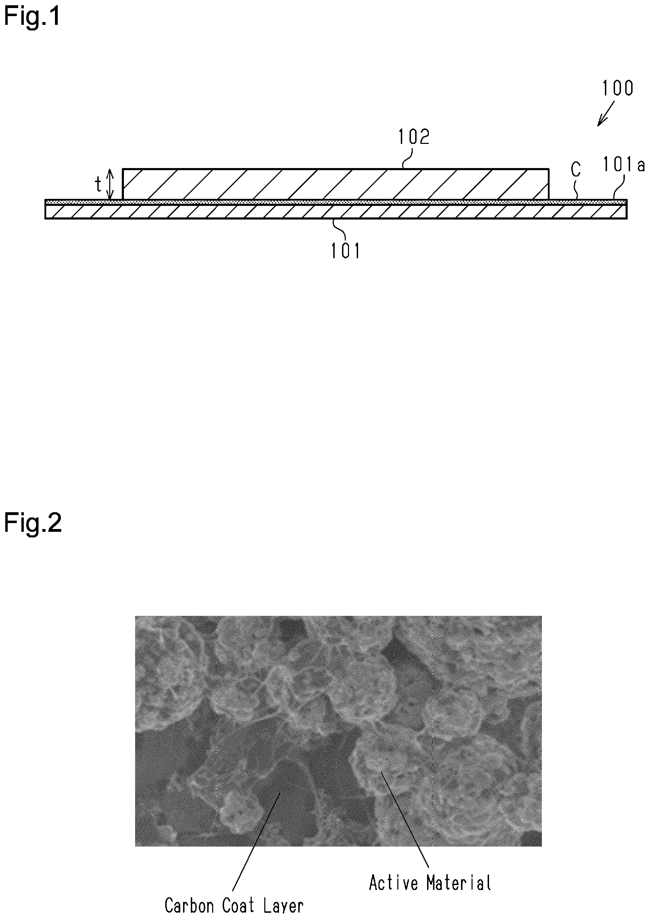

An electrode of the present embodiment is used as a positive electrode or a negative electrode of a power storage device. The power storage device is, for example, a rechargeable battery such as a nickel-hydrogen rechargeable battery or a lithium-ion rechargeable battery. In addition, the power storage device may be an electric double-layer capacitor. In the following, the case of the electrode for the lithium-ion rechargeable battery will be described.
As is shown in Fig. 1, an electrode 100 includes a current collector 101, and an active material layer 102 provided on a first surface 101a of the current collector 101.

Current Collector

The current collector 101 is a chemically inert electrical conductor for continuously passing an electric current through the active material layer 102, while the lithium-ion rechargeable battery is discharged or charged. The current collector 101 is, for example, foil-like. A thickness of the foil-like current collector 101 is, for example, in a range of 1 $\mu$m to 100 $\mu$m, and is preferably in a range of 10 $\mu$m to 60 $\mu$m. As a material for forming the current collector 101, a metal material, a conductive resin material, a conductive inorganic material, or the like can be used, for example.
Examples of the above metal material include copper, aluminum, nickel, titanium, and stainless steel. Examples of the above conductive resin material include a resin in which a conductive filler is added to a conductive polymer material or a nonconductive polymer material, as needed.
In a case in which the electrode 100 is used as the positive electrode of the power storage device, it is preferable that the current collector 101 be an aluminum current collector composed of aluminum. The aluminum current collector may be made of aluminum alone, or may be made of an aluminum alloy. Examples of the aluminum alloy include an Al-Mn alloy, an Al-Mg alloy, and an Al-Mg-Si alloy. The content ratio of aluminum in an aluminum layer 11a is, for example, 50% by mass or more, and is preferably 70% by mass or more.
A carbon coat layer C is provided on the entire surface of the first surface 101a of the current collector 101. The thickness of the carbon coat layer C is, for example, 0.1 $\mu$m or more, and is preferably 0.2 $\mu$m or more. When the thickness of the carbon coat layer C is set to 0.1 $\mu$m or more, a peel strength of the active material layer 102 to the current collector 101 is enhanced. The thickness of the carbon coat layer C is, for example, 5.0 $\mu$m or less, and is preferably 2.0 $\mu$m or less. When the thickness of the carbon coat layer C is set to 5.0 $\mu$m or less, it is possible to increase the volume ratio of the active material layer 102 in the power storage device to which the electrode 100 is applied. As a result, it is possible to enhance the energy density of the power storage device to which the electrode 100 is applied.
The carbon coat layer C is not particularly limited, and a known carbon coat layer that is used for a current collector of an electrode can be used. One example of the carbon coat layer C includes carbon particles and a coat layer binder. The carbon coat layer C may contain other components in addition to the carbon particles and the coat layer binder, as needed.
Examples of the carbon particles include known carbon materials that are applied to the carbon coat layer, such as graphite, acetylene black, and carbon black. The carbon particle contained in the carbon coat layer C may be one type or a combination of two or more types. The content ratio of the carbon particle in the carbon coat layer C is, for example, in a range of 30% by mass to 90% by mass.
Examples of the material contained in the coat layer binder include an acrylic resin, a cellulose derivative, and a carboxy-modified styrene-butadiene rubber.
Examples of the acrylic resin include: a homopolymer of an acrylic monomer such as acrylic acid, methacrylic acid, or a (meth)acrylic acid ester; and a (meth)acrylic copolymer containing the above acrylic monomer. In the present embodiment, (meth)acrylic acid means acrylic acid or methacrylic acid.

Examples of the above (meth)acrylic acid ester include methyl (meth)acrylate, ethyl (meth)acrylate, isopropyl (meth)acrylate, n-butyl (meth)acrylate, and isobutyl (meth)acrylate.

In the above (meth)acrylic copolymer, examples of the other comonomer which is copolymerized with the acrylic monomer include $\alpha$-olefin, styrene, $\alpha$-methylstyrene, vinyltoluene, acrylonitrile, methacrylonitrile, and vinyl acetate. These comonomers can exist in forms of a random copolymer, a graft copolymer, or a block copolymer, in the acrylic resin. Examples of the above (meth)acrylic copolymer include a silicone-modified acrylic styrene resin, a carboxy-modified acrylic styrene resin, and a hydroxyl group-modified acrylic resin.

Examples of the cellulose derivative include carboxymethyl cellulose and a salt of carboxymethyl cellulose. Examples of the salt of carboxymethyl cellulose include a sodium salt or ammonium salt of the carboxymethyl cellulose. The material included in the coat layer binder may be one type or a combination of two or more types. The content ratio of the coat layer binder in the carbon coat layer C is, for example, in a range of 10% by mass to 70% by mass.

The carbon coat layer C can be formed by, for example, applying a carbon paste containing the carbon particle and the coat layer binder to the first surface 101a of the current collector 101, and then solidifying a film of the applied carbon paste.

Active Material Layer

The active material layer 102 is formed on the carbon coat layer C on the first surface 101a of the current collector 101. The active material layer 102 includes: an active material that can store and release charge carriers such as lithium ions; an aqueous binder; and single-walled carbon nanotubes (SWCNT). In the following, the single-walled carbon nanotube is described as the carbon nanotube.

In a case in which the electrode 100 is used as a positive electrode of a power storage device, the active material contained in the active material layer 102 is a positive electrode active material. For the positive electrode active material, it is acceptable to adopt a material that can be used as a positive electrode active material of a lithium-ion rechargeable battery, such as a lithium composite metal oxide having a layered rock-salt structure, a metal oxide having a spinel structure, or a polyanionic compound. In addition, it is also acceptable to use two or more types of positive electrode active materials in combination. Specific examples of the positive electrode active material include olivine-type lithium iron phosphate ($LiFePO_4$), which is a polyanionic compound.

In a case in which the electrode 100 is used as a negative electrode of the power storage device, the active material contained in the active material layer 102 is a negative electrode active material. As the negative electrode active material, it is acceptable to adopt a material that can be used as a negative electrode active material of a lithium-ion rechargeable battery, such as Li, carbon, a metal compound, an element that can be alloyed with lithium, or a compound thereof. Examples of the carbon include natural graphite, artificial graphite, hard carbon (non-graphitizable carbon), and soft carbon (graphitizable carbon). Examples of the artificial graphite include highly oriented graphite and mesocarbon microbeads. Examples of the element that can be alloyed with lithium include silicon and tin.

The active material content of the active material layer 102 is not particularly limited. The active material content of the active material layer 102 is, for example, 96% by mass or more, and is preferably 97% by mass or more. When the active material content of the active material layer 102 is set to 96% by mass or more, it is possible to increase the volume ratio of the active material in the active material layer 102. As a result, it is possible to enhance the energy density of the power storage device to which the electrode 100 is applied. The active material content of the active material layer 102 is, for example, 98.965% by mass or less, and is preferably 98% by mass or less.

The aqueous binder is a binder that is soluble or dispersible in an aqueous solvent, and is a binder that is used in a state of being dispersed or dissolved in an aqueous solvent, and by being mixed with the positive electrode active material. The aqueous binder is not particularly limited, and it is possible to use a material which is conventionally known as an aqueous binder contained in an active material layer of a lithium-ion rechargeable battery. Examples of the aqueous binder include: fluorine-containing resins such as polyvinylidene fluoride, polytetrafluoroethylene, and fluororubber; thermoplastic resins such as polypropylene and polyethylene; imide resins such as polyimide and polyamide-imide; alkoxysilyl group-containing resins; acrylic resins such as poly (meth)acrylic acid; styrene-butadiene rubber; carboxymethyl cellulose; alginates such as sodium alginate and ammonium alginate; water-soluble cellulose ester crosslinked products; and starch-acrylic acid graft polymers. The aqueous binder contained in the active material layer 102 may be one type, or may be two or more types.

The aqueous binder content of the active material layer 102 is not particularly limited. The aqueous binder content of the active material layer 102 is, for example, 1.0% by mass or more, and is preferably 1.3% by mass or more. The aqueous binder content of the active material layer 102 is, for example, 2.5% by mass or less, and is preferably 2.1% by mass or less.

It is preferable that the active material layer 102 contain the styrene-butadiene rubber as the aqueous binder. The styrene-butadiene rubber content of the active material layer 102 is, for example, in a range of 1.2% by mass to 2.5% by mass. In addition, in a case in which the styrene-butadiene rubber content is 1.2% by mass or more, a peel strength of the active material layer 102 is enhanced with respect to the current collector 101. In addition, it is preferable that the styrene-butadiene rubber content be 1.8% by mass or less. In this case, the degree of bending of the active material layer 102 is relatively small, so that ion conductivity is enhanced, and the output performance of the power storage device is also enhanced.

The fiber length and the fiber diameter of the carbon nanotube are not particularly limited. The fiber length of the carbon nanotube is, for example, in a range of 5 $\mu$m to 1000 $\mu$m. The fiber diameter of the carbon nanotube is, for example, in a range of 1.6 nm to 100 $\mu$m. In addition, it is preferable that the fiber length distribution of the carbon nanotubes be a fiber length distribution in which there is only one main peak in a graph showing the fiber length distribution.

The carbon nanotube content of the active material layer 102 is in a range of 0.035% by mass to 0.08% by mass. When the carbon nanotube content is set to 0.035% by mass or more, the peel strength of the active material layer 102 to the current collector 101 is enhanced. In addition, when the carbon nanotube content is set to 0.08% by mass or less, the long-term output power of the power storage device is enhanced.

The active material layer 102 can contain other components in addition to the above described three components of the active material, the aqueous binder, and the carbon nanotubes, as needed. Examples of the other components include a conductive aid, an electrolyte (polymer matrix, ion conductive polymer, electrolytic solution, or the like), and an electrolyte supporting salt (lithium salt) for enhancing ion conductivity. Examples of the conductive aid include acetylene black, carbon black, and graphite. The type and content of the other components are not particularly limited, and conventionally known knowledge about lithium-ion rechargeable batteries can be appropriately referred to.

The active material layer 102 is formed to be thicker than usual, from the viewpoint of enhancing the energy density of the power storage device. A thickness t of the active material layer 102 is 250 $\mu$m or more. In addition, the thickness t of the active material layer 102 is, for example, 750 $\mu$m or less.

The density of the active material layer 102 is not particularly limited. The density of the active material layer 102 is, for example, 1.8 g/cm$^3$ or more. When the density of the active material layer 102 is high, the long-term output power of the power storage device tends to easily decrease, which originates in the fact that the carbon nanotubes are contained therein. In addition, the density of the active material layer 102 is, for example, 2.4 g/cm$^3$ or less.

Power Storage Device

Next, one example of the power storage device will be described to which the electrode 100 is applied.

The power storage device to which the electrode 100 is applied is, for example, a power storage module that is used for a battery of various vehicles such as a forklift, a hybrid electric vehicle, and a battery electric vehicle. In the present embodiment, a case will be described, as an example, in which the power storage device 10 is a lithium-ion rechargeable battery.

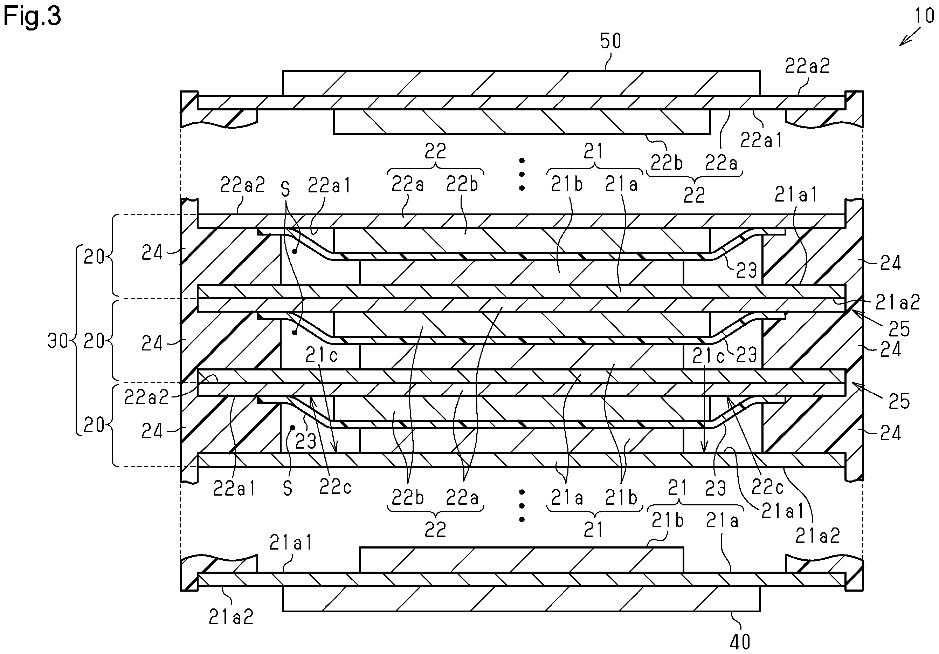

As is shown in Fig. 3, the power storage device 10 is configured to include a cell stack 30 (stacked body) in which multiple power storage cells 20 are stacked (laminated) in a stacking direction. Hereinafter, the stacking direction of the power storage cells 20 is simply referred to as a stacking direction. Each power storage cell 20 includes a positive electrode 21, a negative electrode 22, a separator 23, and a spacer 24. Either or both of the positive electrode 21 and the negative electrode 22 of the power storage cell 20 are the above described electrode 100. In Fig. 3, the illustration of the carbon coat layer C is omitted.

The positive electrode 21 includes a positive electrode current collector 21a, and a positive electrode active material layer 21b, which is provided on a first surface 21a1 of the positive electrode current collector 21a. In a case in which the positive electrode 21 is the electrode 100, the positive electrode current collector 21a is the current collector 101, and the positive electrode active material layer 21b is the active material layer 102.

In plan view seen from the stacking direction (hereinafter simply referred to as plan view), the positive electrode active material layer 21b is formed in the central portion of the first surface 21a1 of the positive electrode current collector 21a. A peripheral portion of the first surface 21a1 of the positive electrode current collector 21a in plan view is formed to be a positive electrode uncoated portion 21c, in which the positive electrode active material layer 21b is not provided. The positive electrode uncoated portion 21c is arranged so as to surround the periphery of the positive electrode active material layer 21b, in plan view.

The negative electrode 22 includes a negative electrode current collector 22a, and a negative electrode active material layer 22b, which is provided on a first surface 22a1 of the negative electrode current collector 22a. In a case in which the negative electrode 22 is the electrode 100, the negative electrode current collector 22a is the current collector 101, and the negative electrode active material layer 22b is the active material layer 102.

In plan view, the negative electrode active material layer 22b is formed in the central portion of the first surface 22a1 of the negative electrode current collector 22a. The peripheral portion of the first surface 22a1 of the negative electrode current collector 22a in plan view is formed to be a negative electrode uncoated portion 22c, in which the negative electrode active material layer 22b is not provided. The negative electrode uncoated portion 22c is arranged so as to surround the periphery of the positive electrode active material layer 21b, in plan view. The positive electrode 21 and the negative electrode 22 are arranged so that the positive electrode active material layer 21b and the negative electrode active material layer 22b face each other in the stacking direction. In other words, the direction in which the positive electrode 21 and the negative electrode 22 face each other coincides with the stacking direction. The negative electrode active material layer 22b is formed to have the same size as the positive electrode active material layer 21b, or is formed to be slightly larger than the positive electrode active material layer 21b. In a case in which the negative electrode active material layer 22b is formed to be slightly larger than the positive electrode active material layer 21b, the entire region in which the positive electrode active material layer 21b is formed is located within the region in which the negative electrode active material layer 22b is formed, in plan view.

The positive electrode current collector 21a has a second surface 21a2, which is a surface on the opposite side of the first surface 21a1. The positive electrode 21 is an electrode having a monopolar structure in which neither the positive electrode active material layer 21b nor the negative electrode active material layer 22b is formed on the second surface 21a2 of the positive electrode current collector 21a. The negative electrode current collector 22a has a second surface 22a2, which is a surface opposite to the first surface 22a1. The negative electrode 22 is an electrode having a monopolar structure in which neither the positive electrode active material layer 21b nor the negative electrode active material layer 22b is formed on the second surface 22a2 of the negative electrode current collector 22a.

The separator 23 is a member that is arranged between the positive electrode 21 and the negative electrode 22, and that prevents a short circuit due to contact between the positive electrode 21 and the negative electrode 22, by separating both the electrodes from each other, and that allows charge carriers such as lithium ions to pass therethrough.

The separator 23 is, for example, a porous sheet or nonwoven fabric that contains a polymer that absorbs and retains an electrolyte. Examples of the material included in the separator 23 include polyolefins such as polypropylene and polyethylene, and polyesters. The separator 23 may have a single-layer structure or a multilayer structure. Examples of the multilayer structure may include an adhesive layer, and a ceramic layer as a heat-resistant layer.

The spacer 24 is arranged between the first surface 21a1 of the positive electrode current collector 21a of the positive electrode 21 and the first surface 22a1 of the negative electrode current collector 22a of the negative electrode 22, and on the outer periphery side of the positive electrode active material layer 21b and the negative electrode active material layer 22b. The spacer 24 is bonded to both the positive electrode current collector 21a and the negative electrode current collector 22a. The spacer 24 maintains the distance between the positive electrode current collector 21a and the negative electrode current collector 22a, prevents a short circuit between the current collectors, and provides a liquid-tight seal between the current collectors.

The spacer 24 is formed in a frame shape that extends along the peripheral edge portions of the positive electrode current collector 21a and the negative electrode current collector 22a, and surrounds the peripheries of the positive electrode current collector 21a and the negative electrode current collector 22a in plan view. The spacer 24 is arranged between the positive electrode uncoated portion 21c of the first surface 21a1 of the positive electrode current collector 21a and the negative electrode uncoated portion 22c of the first surface 22a1 of the negative electrode current collector 22a.

Examples of the material included in the spacer 24 include various resin materials such as polyethylene (PE), modified polyethylene (modified PE), polystyrene (PS), polypropylene (PP), modified polypropylene (modified PP), ABS resin, and AS resin.

Inside the power storage cell 20, a sealed space S is formed that is surrounded by the frame-shaped spacer 24, the positive electrode 21, and the negative electrode 22. The separator 23 and the electrolyte are accommodated in the sealed space S. A peripheral edge portion of the separator 23 is in a state of being embedded in the spacer 24.

Examples of the electrolyte include a liquid electrolyte, and a polymer gel electrolyte containing an electrolyte retained in a polymer matrix. Examples of the liquid electrolyte include a liquid electrolyte that contains a nonaqueous solvent and an electrolyte salt that is dissolved in the nonaqueous solvent. As the electrolyte salts, known lithium salts can be used such as $LiClO_4$, $LiAsF_6$, $LiPF_6$, $LiBF_4$, $LiCF_3SO_3$, $LiN(FSOz)z$, and $LiN(CF_3SO_2)_2$. In addition, as the nonaqueous solvents, known solvents can be used such as cyclic carbonates, cyclic esters, chain carbonates, chain esters, and ethers. These known solvent materials may be used in combination of two or more types.

The spacer 24 seals the sealed space S between the positive electrode 21 and the negative electrode 22, thereby suppressing leakage of the electrolyte that is accommodated in the sealed space S to the outside. In addition, the spacer 24 also prevents entry of water into the sealed space S from the outside of the power storage device 10. Furthermore, the spacer 24 prevents, for example, leakage of gas that has been generated from the positive electrode 21 or the negative electrode 22 due to a charge and discharge reaction or the like to the outside of the power storage device 10.

The cell stack 30 has a structure in which the power storage cells 20 are stacked so that the second surface 21a2 of the positive electrode current collector 21a and the second surface 22a2 of the negative electrode current collector 22a are in contact with each other. Thereby, the power storage cells 20 in the cell stack 30 are connected in series.

In the cell stack 30, two power storage cells 20 are adjacent to each other in the stacking direction, and thereby a pseudo bipolar electrode 25 is formed in which the positive electrode current collector 21a and the negative electrode current collector 22a in contact with each other are regarded as one current collector. The pseudo bipolar electrode 25 includes a current collector having a structure in which the positive electrode current collector 21a and the negative electrode current collector 22a are stacked, the positive electrode active material layer 21b formed on one surface of the current collector, and the negative electrode active material layer 22b formed on the other surface of the current collector.

The power storage device 10 includes two conductive bodies, which are a positive electrode conductive plate 40 and a negative electrode conductive plate 50, and are arranged so as to sandwich the cell stack 30 in the stacking direction of the cell stack 30 therebetween. The positive electrode conductive plate 40 and the negative electrode conductive plate 50 are each composed of a material excellent in conductivity.

The positive electrode conductive plate 40 is electrically connected to the second surface 21a2 of the positive electrode current collector 21a of the positive electrode 21, which is arranged on the outermost side at one end in the stacking direction. The negative electrode conductive plate 50 is electrically connected to the second surface 22a2 of the negative electrode current collector 22a of the negative electrode 22, which is arranged on the outermost side at the other end in the stacking direction.

The power storage device 10 is charged and discharged through terminals provided on the positive electrode conductive plate 40 and the negative electrode conductive plate 50, respectively. As a material included in the positive electrode conductive plate 40, for example, a material can be used that is the same as the material included in the positive electrode current collector 21a. The positive electrode conductive plate 40 may be composed of a metal plate that is thicker than the positive electrode current collector 21a, which is used in the cell stack 30. As a material included in the negative electrode conductive plate 50, for example, a material can be used that is the same as the material included in the negative electrode current collector 22a. The negative electrode conductive plate 50 may be composed of a metal plate that is thicker than the negative electrode current collector 22a, which is used in the cell stack 30.

Next, operation of the present embodiment will be described.

An image shown in Fig. 2 is an electron micrograph of the first surface 101a of the current collector 101 after the active material layer 102 has been peeled off from the current collector 101 of the electrode 100. In the image, the spherical objects are the active material, and the fibrous objects are the carbon nanotubes. The carbon nanotubes are in a state of being entangled to the surface of the active material, and adhere also to the carbon coat layer C of the current collector 101 so as to form roots. When the carbon nanotube content of the active material layer 102 is set to 0.035% by mass or more, it is possible to suitably create a state in which the carbon nanotubes adhere to the active material and the carbon coat layer C. As a result, the peel strength of the active material layer 102 to the current collector 101 is enhanced.

As described above, in a case in which the carbon nanotubes are contained in the active material layer 102, such an effect is obtained as to enhance the peel strength of the active material layer 102 to the current collector 101, in addition to an effect of enhancing the electron conductivity of the active material layer 102 serving as the conductive aid. However, in an electrode in which the thickness of the active material layer 102 is 250 $\mu$m or more, when the carbon nanotubes are contained in the active material layer 102, such a problem arises that the long-term output power of the power storage device decreases.

This problem originates in the fact that the carbon nanotubes in the active material layer 102 reduce the ion conductivity of the active material layer 102. In detail, when the carbon nanotubes are contained in the active material layer 102, the degree of bending of the active material layer 102 increases, and as a result, the ion conductivity of the active material layer 102 decreases. In addition, when the thickness of the active material layer 102 becomes thick, the mobility of charge carriers such as lithium ions in the active material layer 102 becomes a factor that determines the long-term output power of the power storage device. In other words, the mobility of charge carriers in the active material layer 102 becomes a strong factor that determines the upper limit of the long-term output power. As a result, the decrease in the ion conductivity of the active material layer 102 results in a decrease in the long-term output power of the power storage device.

The present inventors have discovered that it is possible to suppress the above described decrease in the long-term output power of the power storage device by setting the carbon nanotube content of the active material layer 102 to 0.08% by mass or less. Accordingly, it is possible to enhance the long-term output power of the power storage device, by using the electrode 100 of the present embodiment, in which the carbon nanotube content of the active material layer 102 is 0.08% by mass or less.

Next, operation and effect of the present embodiment will be described.

(1) The electrode 100 for the power storage device includes the current collector 101 having the first surface 101a, and the active material layer 102 formed on the first surface 101a of the current collector 101. The thickness of the active material layer 102 is 250 $\mu$m or more. The carbon coat layer C is provided on the first surface 101a of the current collector 101. The active material layer 102 includes the active material that can store and release the charge carriers, the aqueous binder, and the carbon nanotubes. The carbon nanotube content of the active material layer 102 is in a range of 0.035% by mass to 0.08% by mass.

According to the above structure, the long-term output power of the power storage device is enhanced. In addition, according to the above structure, the peel strength of the active material layer 102 to the current collector 101 is enhanced.

(2) The density of the active material layer 102 is 1.8 g/cm$^3$ or more.

In a case in which the carbon nanotubes are contained in the active material layer 102, as the density of the active material layer 102 is increases, the degree of bending of the active material layer 102 becomes more likely to increase. As a result, the long-term output power of the power storage device decreases greatly. As such, in a case in which the density of the active material layer 102 is relatively high, the effect of enhancing the long-term output power of the power storage device, which is described in the above (1), is more remarkably obtained.

(3) The aqueous binder contains the styrene-butadiene rubber. The styrene-butadiene rubber content of the active material layer 102 is in a range of 1.2% by mass to 1.8% by mass.

When the styrene-butadiene rubber content is set to 1.2% by mass or more, the peel strength of the active material layer 102 to the current collector 101 is enhanced. In addition, when the styrene-butadiene rubber content is set to 1.8% by mass or less, the degree of bending of the active material layer 102 decreases. As a result, the ion conductivity of the active material layer 102 is enhanced, and also, the output performance of the power storage device is enhanced.

(4) The active material content of the active material layer 102 is 96% by mass or more.

According to the above structure, it is possible to enhance the energy density of the power storage device to which the electrode 100 is applied.

(5) The thickness of the carbon coat layer C is in a range of 0.1 $\mu$m to 5.0 $\mu$m.

According to the above structure, the peel strength of the active material layer 102 to the current collector 101 is enhanced. In addition, according to the above structure, it is possible to enhance the energy density of the power storage device to which the electrode 100 is applied.

The above-described embodiment may be modified in the following way and implemented. The above-described embodiment and the following modifications may be implemented in combination with each other within such a range as not to be technically inconsistent.

The range of the carbon coat layer C on the first surface 101a of the current collector 101 may be changed. For example, the carbon coat layer C may be formed only in a range in which the active material layer 102 is formed on the first surface 101a, or the carbon coat layer C may be formed partially in a part of the range.

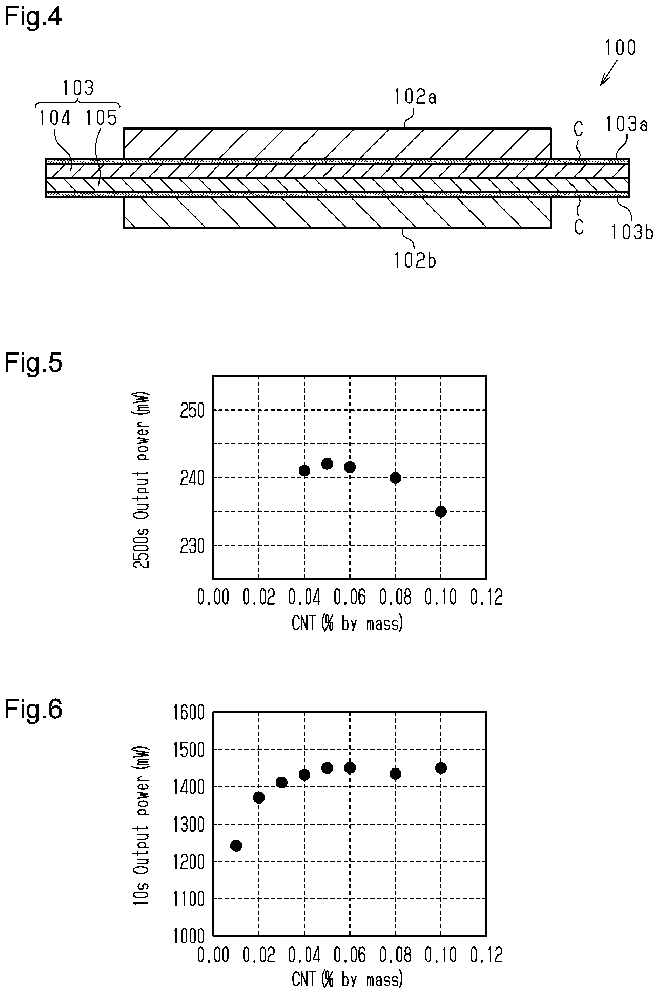

The electrode 100 may be an electrode having a bipolar structure. One example will now be described in which an electrode 100 is used as an electrode having a bipolar structure, with reference to Fig. 4.

The electrode 100 having the bipolar structure shown in Fig. 4 includes a bipolar current collector 103. The bipolar current collector 103 is a laminate in which a foil-like positive electrode current collector 104 and a foil-like negative electrode current collector 105 are integrally bonded in the thickness direction. Examples of the bipolar current collector 103 include a current collector in which aluminum foils are bonded to each other, and a current collector in which an aluminum foil and a copper foil are bonded to each other.

A carbon coat layer C is provided on a first surface 103a that is formed by the positive electrode current collector 104 in the bipolar current collector 103. In addition, an active material layer 102a is provided on the first surface 103a. The active material layer 102a is formed as a positive electrode active material layer, via the carbon coat layer C. In addition, the carbon coat layer C is provided on a second surface 103b that is formed by the negative electrode current collector 105, in the bipolar current collector 103. In addition, an active material layer 102b that is formed as a negative electrode active material layer is provided on a second surface 103b, with the carbon coat layer C in between.

One or both of the active material layer 102a and the active material layer 102b are active material layers that satisfy the requirements of the active material layer 102 described in the above embodiment. In a case in which the active material layer 102a is an active material layer that does not satisfy the requirements of the active material layer 102 described in the above embodiment, the carbon coat layer C on the first surface 103a can be omitted. Similarly, in a case in which the active material layer 102b is an active material layer that does not satisfy the requirements of the active material layer 102 described in the above embodiment, the carbon coat layer C on the second surface 103b can be omitted.

The specific structure of the power storage device 10 to which the electrode 100 is applied is not particularly limited, as long as at least one positive electrode or at least one negative electrode corresponds to the electrode 100. For example, the number of power storage cells 20, which form the power storage device 10, may be one. In addition, the power storage device 10 may include a restraining member that imparts a restraining load to the cell stack 30 in the stacking direction. In addition, the power storage device 10 may include the electrode 100 that is structured as a bipolar electrode. Examples

The following describes examples of implementation of the above embodiment. Production of Positive Electrode

LiFePO$_4$, styrene-butadiene rubber (SBR), carboxymethyl cellulose (CMC), and single-walled carbon nanotubes (CNT) were mixed in blending ratios shown in Table 1 and Table 2, then, water was added to the mixture, and a positive electrode compound having a solid content ratio of 64% by mass was prepared. LiFePOt is a positive electrode active material. Styrene-butadiene rubber (SBR) and carboxymethyl cellulose (CMC) are aqueous binders.

A carbon-coated aluminum foil having a thickness of 30 $\mu$m was prepared, as a positive electrode current collector. A carbon coat having a thickness of 1 $\mu$m was provided on one surface of the carbon-coated aluminum foil. The positive electrode compound was applied as a film to the surface of the positive electrode current collector on which the carbon coat was provided, by a doctor blade method. The applied positive electrode compound was subjected to heat treatment under a condition of 50°C, and the applied positive electrode compound was dried and solidified. Thus, positive electrode sheets of Test Examples 1 to 10 were produced in each of which the positive electrode active material layer having a thickness of 250 μm was formed on the positive electrode current collector. The density of the positive electrode active material layer on each of the obtained positive electrode sheets was measured. As a result, the density of the positive electrode active material layer of each of the positive electrode sheets was all 1.8 g/cm$^3$.

Measurement of Peel Strength

The positive electrode sheets of Test Examples 1 to 10 were each cut into a sheet of 2.5 cm × 4 cm, and the resultant sheets were used as measurement samples, and were each subjected to a 90-degree peel test in accordance with JIS K6854-1 using a peel testing apparatus (LTS-50N-S300 manufactured by Minebea Co., Ltd.,). The strength measured with the 90-degree peel test was divided by a line width (2.5 cm), and thereby, the peel strength of the positive electrode active material layer to the positive electrode current collector in the measurement sample was calculated. The results are shown in Table 1 and Table 2.

[Table 1]

| | | Test Example 1 | Test Example 2 | Test Example 3 | Test Example 4 | Test Example 5 |
|---|---|---|---|---|---|---|
| Blending ratio (mass%) | LiFePO$_4$ | 96.90 | 96.89 | 96.88 | 96.87 | 96.87 |
| | CNT | 0 | 0.01 | 0.02 | 0.03 | 0.035 |
| | SBR | 2.1 | 2.1 | 2.1 | 2.1 | 2.1 |
| | CMC | 1.0 | 1.0 | 1.0 | 1.0 | 1.0 |
| Peel strength (N/cm) | | 0.21 | 0.15 | 0.19 | 0.25 | 0.40 |

[Table 2]

| | | Test Example 6 | Test Example 7 | Test Example 8 | Test Example 9 | Test Example 10 |
|---|---|---|---|---|---|---|
| Blending ratio (mass%) | LiFePO$_4$ | 96.86 | 96.85 | 96.84 | 96.82 | 96.80 |
| | CNT | 0.04 | 0.05 | 0.06 | 0.08 | 0.1 |
| | SBR | 2.1 | 2.1 | 2.1 | 2.1 | 2.1 |
| | CMC | 1.0 | 1.0 | 1.0 | 1.0 | 1.0 |
| Peel strength (N/cm) | | 0.44 | 0.45 | 0.45 | 0.54 | 0.53 |

As shown in Table 1 and Table 2, the peel strength of the positive electrode active material layer to the positive electrode current collector increased as the CNT content increased. In addition, an increase tendency of the above peel strength greatly increased when the CNT content was between 0.03% by mass (Test Example 4) and 0.035% by mass (Test Example 5), and increased moderately in other ranges. From these results, it is understood that the peel strength of the active material layer to the current collector remarkably increases when the CNT content of the active material layer is set to 0.035% by mass or more.

Preparation of Power Storage Device

The positive electrodes were obtained by cutting each of the positive electrode sheets of Test Examples 1 to 10 into rectangular shapes of 30 mm × 25 mm. The resultant positive electrodes, negative electrodes, and separators were combined to produce electrode body batteries. The electrode body batteries were each accommodated in a battery case. Then, an electrolytic solution was injected into the battery case, and the battery case was sealed, so as to produce a lithium-ion rechargeable battery.

As the negative electrode, a negative electrode was used that included a negative electrode current collector formed from copper, and a negative electrode active material layer that was formed from graphite of a negative electrode active material, styrene-butadiene rubber as a binder, and carboxymethyl cellulose of an emulsifying agent. As the separator, a separator formed from polyethylene was used. As the electrolytic solution, an electrolytic solution was used in which lithium hexafluorophosphate was dissolved in a mixed solvent in which methyl propionate and ethylene carbonate were mixed at a volume ratio of 15: 85, so as to become a concentration of 1.2 M.

Evaluation of Output Performance of Power Storage Device Evaluation of Long-Term Output Power

In the present evaluation, lithium-ion rechargeable batteries were used that were obtained using the positive electrode sheets of Test Examples 6 to 10, which exhibited high peel strength. Each of the lithium-ion rechargeable batteries was electrically charged at a constant current (CC) until the voltage reached 3.75 V. After that, the battery was discharged at 40°C at a constant power of 200 to 300 mW, and the power (2500-second output power) outputted for 2500 seconds was calculated. A graph is shown Fig. 5, in which values of the 2500-second output powers are plotted against the CNT content, in the respective Test Examples.

Evaluation of Short-Term Output Power

In the present evaluation, lithium-ion rechargeable batteries were used that were obtained using of the positive electrode sheets of Test Examples 2 to 4 and 6 to 10. Each of the lithium-ion rechargeable batteries was electrically charged with a direct current of 10 mA at a constant current (CC) until a voltage of the negative electrode with respect to the positive electrode reached 3.75 V, and then was electrically discharged to a state of charge (SOC) of 80%. After that, the batteries were electrically discharged at 25°C at an electric current of 10 C rate for 10 seconds, and the output power at the time of 10-second discharge (10-second output power) was calculated. A graph of Fig. 6 shows values of the 10-second output powers plotted against the CNT content, in the respective Test Examples.

As shown in the graph of Fig. 5, the 2500-second output power, which is a parameter indicating the long-term output power, is almost constant in a range in which the CNT content is 0.04 to 0.08% by mass, and decreases greatly when the CNT content increases to 0.10% by mass. On the other hand, as shown in the graph of Fig. 6, the 10-second output power, which is a parameter indicating the short-term output power, increases as the CNT content increases, in a range of 0.04% by mass or less, and is almost constant in a range of 0.04% by mass or more. These results show that the addition of 0.10% by mass or more of CNTs does not affect the short-term output power, but decreases the long-term output power.

In addition, although detailed test data will be omitted, similar tests were performed using the positive electrode sheets of which the thicknesses of the positive electrode active material layers on the positive electrode sheets of Test Examples 1 to 10 were each changed from 250 $\mu$m to 120 $\mu$m. As a result, decrease was not observed in either the short-term output power or the long-term output power when 0.10% by mass or more of CNTs were added. Therefore, the decrease in the long-term output power due to the addition of CNTs at 0.10% by mass or more is a phenomenon specific to when the active material layer is formed to be thicker. From these results, it can be concluded that when the thickness of the active material layer is 250 $\mu$m or more, the long-term output power improves when the CNT content of the active material layer is 0.08% by mass or less compared to when it exceeds 0.08% by mass.

Evaluation of Degree of Bending

Symmetric model cells for measuring the degree of bending were produced using a positive electrode that was obtained by cutting each of the positive electrode sheets of Test Example 7 and Test Example 9 into a predetermined shape, a separator, and an electrolytic solution. As the separator, a separator formed from polyethylene was used. As the electrolytic solution, an electrolytic solution was used in which lithium hexafluorophosphate was dissolved in a mixed solvent in which methyl propionate and ethylene carbonate were mixed at a volume ratio of 15:85, so that the concentration of the lithium hexafluorophosphate was 1.2 M.

The degree of bending $\tau$ of the positive electrode active material layer of the positive electrode sheet of each Test Example was calculated on the basis of the following Expression (1). The results are shown in Table 3.

$$\text{Degree of bending } \tau = (R_{ion} \cdot A \cdot \cdot K \cdot \varepsilon)/2d \ ... \ (1)$$

$R_{ion}$: Ionic resistance
A: Area of electrode (8.06 cm$^2$)
K: Ion conductivity of electrolytic solution
$\varepsilon$: Porosity of positive electrode active material layer
d: Thickness of positive electrode active material layer (250 $\mu$m)

The symmetric cell impedance of the symmetric model cell was measured, and the ionic resistance $R_{ion}$ was

derived from a real number component (ionic resistance $R_{ion}/3$) of the extreme low frequency of the measured symmetric cell impedance.

The ionic conductivity K of the electrolytic solution was calculated from a value of the resistance at 25°C and 10 kHz of the sample measured in which the electrolytic solution having the above composition was enclosed in a cell having a platinum electrode.

The porosity $\varepsilon$ of the positive electrode active material layer was measured with a mercury intrusion method.

[Table 3]

| | | Test Example 7 | Test Example 9 |
|---|---|---|---|
| Blending ratio (% by mass) | LiFePO$_4$ | 96.85 | 96.82 |
| | CNT | 0.05 | 0.08 |
| | SBR | 2.1 | 2.1 |
| | CMC | 1.0 | 1.0 |
| Degree of bending $\tau$ | | 2.1 | 2.3 |

As shown in Table 3, the degree of bending of Test Example 9, in which the CNT content was relatively high, was higher than the degree of bending of Test Example 7, in which the CNT content was relatively low. This result shows that the CNTs contained in the active material layer was a factor in increasing the degree of bending of the active material layer, in other words, a factor in decreasing the ion conductivity of the active material layer. Accordingly, the decrease in the long-term output power caused by the addition of 0.10% by mass or more of CNTs is considered to be due to the decrease in the ion conductivity of the active material layer by the CNTs.

In addition, in a case in which the active material layer is formed to be thick, the influence of the decrease in the ion conductivity increases. Therefore, according to the hypothesis that the long-term output power decreases due to the decrease in the ion conductivity of the active material layer caused by CNTs, it can also be explained that the decrease in the long-term output power is a phenomenon specific to cases in which the active material layer is formed to be thick.

Test Regarding Styrene-Butadiene Rubber (SBR) Content

Positive electrode sheets of Test Examples 11 to 13 were produced according to the same method as in Test Examples 1 to 10, except that a blending ratio was changed to the blending ratios shown in Table 4. The density of the positive electrode active material layer of each of obtained positive electrode sheets was measured. As a result, the densities of the positive electrode active material layers of the positive electrode sheets were all 2.0 g/cm$^3$. In addition, a positive electrode sheet of Test Example 14 was produced according to the same method as in Test Examples 1 to 10, except that the thickness of the positive electrode active material layer was changed from 250 $\mu$m to 370 $\mu$m, and the blending ratio was changed to a blending ratio shown in Table 4. The density of the positive electrode active material layer of the positive electrode sheet of Test Example 14 was measured. The density was 2.0 g/cm$^3$.

The peel strength between the positive electrode active material layer and the positive electrode current collector in each of the positive electrode sheets of Test Examples 11 to 13 and the positive electrode sheet of Test Example 14 was calculated according to the same method as in the above. In addition, the degree of bending of the positive electrode active material layer of each of Test Examples 11 to 13 was calculated according to the same method as in the above. The results are shown in Table 4.

In addition, lithium-ion rechargeable batteries were produced using the positive electrode sheets of Test Examples 11 to 13 according to the same method as in the above. Each of the produced lithium-ion rechargeable batteries was electrically charged with a constant current (CC) until the voltage with respect to the positive electrode reached 3.75 V, and then the capacity $C_{0.01}$ at the time when the battery was discharged at 0.01 C and the capacity $C_1$ at the time when the battery was discharged at 1 C were obtained. Then, $\Delta$SOC (%) was calculated from the capacity $C_{0.01}$ and the capacity $C_1$, on the basis of the following Expression (2). The results are shown in Table 4.

$$\Delta SOC(\%) = (C_1/C_{0.01}) \times 100 \ldots (2)$$

[Table 4]

| | Test Example 11 | Test Example 12 | Test Example 13 | Test Example 14 |
|---|---|---|---|---|
| Thickness of active material layer (μm) | 250 | 250 | 250 | 370 |
| Blending ratio (mass%) — LiFePO$_4$ | 97.95 | 97.65 | 97.05 | 98.25 |
| CNT | 0.05 | 0.05 | 0.05 | 0.05 |
| SBR | 1.2 | 1.5 | 2.1 | 1.3 |
| CMC | 0.8 | 0.8 | 0.8 | 0.4 |
| Peel strength (N/cm) | 0.3 | 0.4 | 0.5 | 0.35 |
| Degree of bending τ | 1.9 | 2.0 | 2.1 | - |
| ΔSOC (%) | 75 | 75 | 73 | - |

As shown in Table 4, the peel strength of the positive electrode active material layer to the positive electrode current collector increased as the SBR content increased. The degree of bending of the positive electrode active material layer increased as the SBR content increased. ΔSOC is a parameter that indicates an output performance under steady-state driving conditions. The values of ΔSOC in Test Example 11 and Test Example 12 were approximately the same, and the value in Test Example 13, which had a higher SBR content than Test Example 11 and Test Example 12, became less than the values in Test Example 11 and Test Example 12. These results show that it is preferable to increase the SBR content, from the viewpoint of enhancing the peel strength of the active material layer. In addition, it is concluded that it is preferable to set the SBR content to 1.8% by mass or less, from the viewpoint of enhancing the output performance.

As shown in Table 4, the peel strength of Test Example 14 was 0.35 N/cm, of which the thickness of the positive electrode active material layer was changed from 250 μm to 370 μm. The result shows that the thickness of the active material layer does not have a strong influence on the peel strength.

A technical concept that can be understood from each of the above-described embodiment and modifications will now be described.

(A) A power storage device including an electrode in which an active material layer is formed on a first surface of a current collector, in which

a carbon coat layer is provided on the first surface of the current collector,
a thickness of the active material layer is 250 μm or more,
the active material layer contains an active material that can store and release charge carriers, an aqueous binder, and carbon nanotubes, and
a content of the carbon nanotubes in the active material layer is in a range of 0.035% by mass to 0.08% by mass.

REFERENCE SIGNS LIST

C) Carbon Coat Layer
100) Electrode
101) Current Collector
101a) First Surface
102) Active Material Layer

Claims

1.　An electrode for a power storage device, comprising:

a current collector having a first surface; and
an active material layer that is formed on the first surface of the current collector and has a thickness of 250 μm or more, wherein
a carbon coat layer is provided on the first surface of the current collector,

the active material layer contains

an active material that can store and release charge carriers,
an aqueous binder, and
single-walled carbon nanotubes, and

a content of the single-walled carbon nanotubes in the active material layer is in a range of 0.035% by mass to 0.08% by mass.

2. The electrode for the power storage device according to claim 1,
wherein a density of the active material layer is 1.8 g/cm$^3$ or more.

3. The electrode for the power storage device according to claim 1 or claim 2, wherein

the aqueous binder contains styrene-butadiene rubber, and
a content of the styrene-butadiene rubber is in a range of 1.2% by mass to 1.8% by mass.

4. The electrode for the power storage device according to any one of claims 1 to 3, wherein the current collector is an aluminum current collector that is composed of aluminum, and the current collector is used as a positive electrode.

5. The electrode for the power storage device according to any one of claims 1 to 4, wherein a content of the active material in the active material layer is 96% by mass or more.

6. The electrode for the power storage device according to any one of claims 1 to 5, wherein a thickness of the carbon coat layer is in a range of 0.1 $\mu$m to 5.0 $\mu$m.

Fig.1

Fig.2

Carbon Coat Layer

Active Material

Fig.3

EP 4 503 166 A1

Fig.4

Fig.5

Fig.6

| | INTERNATIONAL SEARCH REPORT | International application No.<br><br>**PCT/JP2023/010188** |
|---|---|---|

**A. CLASSIFICATION OF SUBJECT MATTER**

*H01M 4/13*(2010.01)i; *H01G 11/26*(2013.01)i; *H01G 11/28*(2013.01)i; *H01G 11/30*(2013.01)i; *H01G 11/36*(2013.01)i; *H01G 11/50*(2013.01)i; *H01G 11/68*(2013.01)i; *H01G 11/70*(2013.01)i; *H01M 4/32*(2006.01)i; *H01M 4/62*(2006.01)i; *H01M 4/66*(2006.01)i

FI: H01M4/13; H01G11/26; H01G11/28; H01G11/30; H01G11/36; H01G11/50; H01G11/68; H01G11/70; H01M4/32; H01M4/62 C; H01M4/62 Z; H01M4/66 A

According to International Patent Classification (IPC) or to both national classification and IPC

**B. FIELDS SEARCHED**

Minimum documentation searched (classification system followed by classification symbols)

H01M4/13; H01G11/26; H01G11/28; H01G11/30; H01G11/36; H01G11/50; H01G11/68; H01G11/70; H01M4/32; H01M4/62; H01M4/66

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/020939 A1 (LG CHEM, LTD.) 04 February 2021 (2021-02-04) | 1-6 |
| A | WO 2021/066495 A1 (LG ENERGY SOLUTION, LTD.) 08 April 2021 (2021-04-08) | 1-6 |
| A | JP 2021-72240 A (TOYO INK SC HOLDINGS CO., LTD.) 06 May 2021 (2021-05-06) | 1-6 |
| A | JP 2017-147222 A (SANYO CHEMICAL INDUSTRIES, LTD.) 24 August 2017 (2017-08-24) | 1-6 |
| A | JP 2015-185260 A (NIPPON SHOKUBAI CO., LTD.) 22 October 2015 (2015-10-22) | 1-6 |

☐ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 May 2023** | **23 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/010188**

| Patent document cited in search report | | | Publication date (day/month/year) | Patent family member(s) | | | Publication date (day/month/year) |
|---|---|---|---|---|---|---|---|
| WO | 2021/020939 | A1 | 04 February 2021 | US | 2022/0238886 | A1 | |
| | | | | EP | 3965182 | A1 | |
| | | | | CN | 113906587 | A | |
| | | | | KR | 10-2021-0015714 | A | |
| WO | 2021/066495 | A1 | 08 April 2021 | US | 2022/0285689 | A1 | |
| | | | | EP | 3982440 | A1 | |
| | | | | CN | 114080705 | A | |
| | | | | KR | 10-2021-0040796 | A | |
| JP | 2021-72240 | A | 06 May 2021 | (Family: none) | | | |
| JP | 2017-147222 | A | 24 August 2017 | US | 2017/0237116 | A1 | |
| JP | 2015-185260 | A | 22 October 2015 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016189325 A